# FASCICULE DE BREVET EUROPEEN

(11) **EP 1 159 556 B1**
(45) Date de publication et mention de la délivrance du brevet: **12.11.2003**
(21) Numéro de dépôt: 00909396.4
(22) Date de dépôt: 01.03.2000
(51) Int. Cl.: F16L 1/038, B29D 23/00, B29B 15/12, B29K 101/10

(54) **PROCEDE ET INSTALLATION DE MISE EN PLACE D'UNE CONDUITE CYLINDRIQUE SUR UN SUPPORT**
VERFAHREN UND VORRICHTUNG ZUM VERLEGEN EINES ZYLINDRISCHEN ROHRES AUF EINE UNTERLAGE
METHOD AND INSTALLATION FOR LAYING A CYLINDRICAL PIPE ON A SUPPORT

(30) Priorité: 05.03.1999 FR 9902969
(43) Date de publication de la demande: 05.12.2001
(73) Titulaire: SERVICES PETROLIERS SCHLUMBERGER, 75007 Paris (FR)
(72) Inventeur: CORRE, Pierre-Yves, F-35160 Montfort-sur-Meu (FR); LEIGHTON, James, F-35590 L'Hermitage (FR); SALTEL, Jean-Louis, F-35650 Le Rheu (FR)
(74) Mandataire: Le Faou, Daniel
(86) Numéro de dépôt international: FR0000506
(87) Numéro de publication internationale: WO00053963

(56) Documents cités:
- EP-A- 0 856 694
- FR-A- 2 155 485
- US-A- 3 737 261
- US-A- 3 823 565
- US-A- 4 135 958
- US-A- 4 182 262
- US-A- 4 558 971
- US-A- 5 451 351

## Description

La présente invention concerne un procédé et une installation pour la mise en place d'une conduite dans une tranchée.

Par le terme « tranchée », on entend en particulier, et principalement, un canal creusé dans le sol, ayant une section en forme générale de « U » ouvert vers le haut, destiné à être rebouché après que la conduite y ait été déposée.

Cependant, l'invention peut couvrir d'autres applications, pourvu que la mise en place de la conduite puisse se faire librement du haut vers le bas.

Ainsi, par exemple, la conduite pourrait être directement posée au sol.

Dans d'autres applications, elle pourrait être déposée sur des berceaux de suspension de section en « U » portés par des poteaux, à une certaine hauteur au dessus du sol.

En revanche, la présente invention ne concerne pas le domaine technique de la réfection, par gainage (revêtement) interne, de canalisations déjà posées dont l'espace intérieur est accessible seulement en direction axiale, à partir d'une extrémité de la canalisation, mais non pas transversalement.

L'invention concerne plus particulièrement la mise en place en continu d'une conduite cylindrique de grande longueur à partir d'un tronçon de préforme tubulaire souple, initialement plié, notamment aplati, susceptible d'être "mis au rond" - c'est-à-dire mis en forme de cylindre - par gonflage, sous l'effet d'une pression pneumatique interne (gaz sous pression), puis rigidifié in situ.

Ce type de conduite est particulièrement destiné au transport de fluides, notamment de gaz ou de pétrole sur de grandes distances.

Traditionnellement, de telles conduites sont, soit en acier, soit en matériau composite composé notamment d'une structure tubulaire filamentaire, par exemple à base de fibres de verre, imprégnée d'une résine durcissable, notamment d'une résine polymérisable sous l'effet de la chaleur.

Les conduites sont réalisées à partir de tronçons de tube élémentaires, de longueur prédéterminée, par exemple de 12 mètres ; à titre indicatif, leur diamètre externe est généralement compris entre 300 et 1 000 mm.

Les conduites en acier sont réalisées par soudage bout à bout d'une grande quantité de tronçons ; elles sont ensuite recouvertes d'un revêtement protecteur anti-corrosion. Lorsque les fluides transportés sont très corrosifs, un revêtement intérieur doit également être prévu.

Les conduites en matériau composite sont avantageusement utilisées lorsque les problèmes de corrosion sont très importants, et ne permettent pas l'utilisation de tubes en acier.

De telles conduites sont également réalisées traditionnellement à partir de tronçons tubulaires de longueur donnée, par exemple de 12 m, qui sont connectés et fixés, bout à bout, généralement par vissage, un collage complétant l'assemblage final.

De telles conduites sont très coûteuses, en particulier à cause de la nécessité de l'usinage des extrémités pour l'assemblage des tronçons de tube bout à bout.

Cette technique classique d'assemblage pose naturellement des problèmes de transport.

En général, les tubes sont transportés sur le site d'installation par des camions, et le nombre de tubes transportés est limité par leur poids et leur volume.

Ainsi, si on a affaire à des tronçons ayant un diamètre de 500 mm, il est possible de transporter seulement une dizaine de tubes de 12 m de longueur (soit au total 120 m de conduite environ) par camion.

Pour poser une conduite de 2 000 m, il faudra par conséquent plus de 16 camions, ce qui correspond à un poids total transporté de 240 tonnes.

En outre, l'assemblage des tubes bout à bout est une tâche longue fastidieuse et délicate ; or, pour une longueur de 2 000 m, il faut réaliser plus de 150 assemblages.

L'objectif principal de l'invention est de proposer une technique de mise en place d'une conduite de grande longueur, par exemple de 2 000 m, directement, et sans connexion. La connexion est à faire seulement entre les conduites de grande longueur, en l'occurrence tous les 2 000 m.

L'état de la technique en la matière peut être illustré par les documents FR-2 155 485 et EP-0 856 694.

Le FR-2 155 485 a pour objet un appareil destiné à la pose de conduites.

La technique décrite dans ce document consiste à utiliser comme préforme de départ un tuyau aplati et mou, en matière durcissable, par exemple en résine polymère synthétique comprenant un catalyseur de réticulation déclenché par la chaleur.

Le tuyau aplati est enroulé sur une bobine.

Sur le site, on déroule la bobine, on met le tuyau au rond, et on le durcit, au fur et à mesure qu'on dépose la conduite au sol. Un outil dilatateur composé de deux sphères, installé à l'intérieur du tube en sortie de la bobine, a pour fonction de mettre le tuyau "au rond", c'est-à-dire de lui donner une forme cylindrique, tandis qu'un dispositif de durcissement de la paroi est mis en oeuvre immédiatement après la mise au rond ; le durcissement est obtenu notamment par arrosage de la conduite à l'aide d'un agent liquide, de composition et de température appropriées.

Le document EP-0 856 694 décrit un procédé selon lequel on part d'une préforme sous forme de tuyau aplati dont la paroi comprend une armature fibreuse, telle qu'une structure tubulaire filamentaire, qui est imprégnée de résine durcissable, par exemple polymérisable à chaud.

La préforme tubulaire est stockée à l'état aplati, par exemple sur un touret (bobine), et est amenée sur le site dans cet état.

Le tuyau, qui peut avoir une grande longueur, est posé dans la tranchée dans cet état aplati, puis est "mis au rond" sous l'effet d'une pression interne générée par un liquide, par exemple de l'eau, introduit à l'intérieur du tuyau.

On opère ensuite le durcissement de la résine, de sorte qu'on obtient une conduite cylindrique et rigide.

Le procédé selon le document FR-A-2 155 485 pose des difficultés de mise en pratique, dans la mesure où il est très difficile de maîtriser le bon maintien de l'outil dilatateur à double sphère prévu à l'intérieur de la préforme, et qui permet sa mise au rond.

Le procédé selon le document EP-0 856 694, requiert l'utilisation d'un liquide sous pression, tel que de l'eau, pour la mise au rond de la préforme, une fois qu'elle a été déposée dans la tranchée ; sa mise en oeuvre est délicate et relativement fastidieuse ; il nécessite, en tout état de cause, la présence sur le site du liquide en question.

Par ailleurs, ces techniques connues utilisent une préforme dont la paroi est déjà pourvue de résine, celle-ci étant incorporée en usine dans la paroi, dès la fabrication de la préforme.

La présence de cette résine influe sur le poids et le volume de la préforme, même si celle-ci se trouve à l'état aplati.

De plus, s'agissant d'une résine thermodurcissable, un stockage à température ambiante en une longue période peut entraîner le démarrage de la réticulation du polymère. Cet avancement non souhaité de la réticulation peut modifier le comportement de la résine, voire même empêcher son utilisation.

Avec les dispositifs connus, il est donc nécessaire de conserver la préforme, et la résine qu'elle contient, dans un conteneur à température contrôlée, y compris durant le transport, ce qui pose bien entendu des problèmes pratiques et de coût de revient.

La présente invention se propose de résoudre ces difficultés.

Pour cela, l'idée à la base de cette invention est de dissocier la résine de la paroi de la préforme au moment de sa fabrication, l'incorporation de la résine dans la paroi se faisant seulement sur le site, juste avant sa mise en place dans la tranchée (ou sur un autre support).

Dans le domaine technique du gainage intérieur de canalisations déjà en place, il a déjà été proposé d'incorporer une résine durcissable dans la paroi de la gaine, juste avant son introduction (axiale) dans la canalisation.

L'état de la technique en la matière peut être illustré par les documents US-4 135 958, US-4 182 262, FR-2 445 220 et FR-2 488 971.

Cependant, dans cette application, l'accès à la canalisation étant uniquement axial, on réalise la mise en place de la gaine tubulaire en en retournant la paroi sur elle même, comme une chaussette, la face initialement interne devenant externe, et inversement.

Cette opération de retournement requiert un effort axial relativement important, d'autant plus élevé que l'épaisseur de la paroi est grande. En pratique elle n'est pas transposable à des épaisseurs de paroi comprises entre 10 et 30 millimètres environ, telles que couramment mises en oeuvre dans le cadre de la présente invention, si on veut mettre en oeuvre une pression modérée, utilisant de l'air comprimé.

La gaine tubulaire est déformable radialement pour lui permettre de se retourner et de s'appliquer contre la paroi à réparer.

Enfin, qu'elle se fasse de manière discontinue (comme dans le US-4 135 958) ou de manière continue, avec formation d'une poche de résine mobile située en amont de la zone de retournement de la paroi, l'imprégnation de la paroi par cette résine est délicate à maîtriser, et cette imprégnation n'est pas homogène.

Le procédé qui fait l'objet de la présente invention est le procédé de mise en place d'une conduite cylindrique dans une tranchée ouverte vers le haut selon la revendication 1.

On notera que, du fait que la mise au rond de la préforme se fait pneumatiquement, cette opération est particulièrement simple et peu coûteuse à mettre en oeuvre, de l'air étant naturellement disponible à volonté sur le site ; il est simplement nécessaire de disposer d'un compresseur générant une pression relativement faible, à titre indicatif de l'ordre de 1 bar (10⁵ Pa).

Par ailleurs, selon un certain nombre de caractéristiques additionnelles, non limitatives de ce procédé :
- on revêt le tronçon de préforme d'une enveloppe tubulaire protectrice, après avoir imprégné son armature de la résine thermodurcissable, avant de la déposer dans la tranchée ;
- l'imprégnation de résine est réalisée sous dépression (par rapport à la pression atmosphérique), voire sous vide ;
- on gonfle le tronçon de préforme par de l'air comprimé après en avoir obturé les extrémités ;
- on utilise une résine thermodurcissable ;
- on durcit la résine par chauffage, par effet Joule, au moyen de résistances électriques incorporées dans l'armature filamentaire ;
- l'armature filamentaire comprend un tressage de fibres croisées, apte à empêcher l'expansion radiale de la paroi de la préforme lorsqu'elle est mise au rond ;
- on amène le tronçon de préforme sur le site à l'état stocké, replié ou enroulé ;
- on utilise un tronçon de préforme initialement revêtu d'une enveloppe tubulaire protectrice, que l'on ôte avant d'imprégner l'armature de la résine durcissable ;
- on réalise la conduite par raccordement bout à bout de plusieurs tronçons de préforme.

L'invention a également pour objet une installation pour la mise en place d'une conduite cylindrique dans une tranchée selon la revendication 10.

Par ailleurs, selon un certains nombre de caractéristiques additionnelles, non limitatives de l'installation :
- cette installation étant destinée à être mise en oeuvre pour une préforme à résine thermodurcissable, les moyens qui servent à provoquer son durcissement sont des moyens de chauffage ;
- ces moyens sont des moyens électriques, aptes à chauffer la résine par effet Joule, via des résistances chauffantes incorporées dans l'armature ;
- l'installation comporte une pompe à vide adaptée pour mettre en dépression les moyens d'imprégnation de résine.

D'autres caractéristiques et avantages de l'invention apparaîtront de la description qui va en être faite maintenant, en référence aux dessins annexés, sur lesquels :
- la figure 1 est une vue schématique, écorchée, en coupe, et en perspective, d'un tronçon de préforme qui est utilisée dans le procédé selon l'invention ;
- les figures 2 et 3 sont des vues schématiques, respectivement de face et de côté, selon le plan de coupe **III-III** de la figure 2, d'un conteneur de stockage de la préforme ;
- la figure 4 est une vue de face schématique d'une installation conforme à l'invention, au cours d'une opération de mise en place d'une conduite ;
- la figure 5 est une vue de côté correspondant au plan de coupe vertical **V-V** de la figure 4 ;
- la figure 6 est une vue de dessus schématique d'une partie de cette même installation, cette vue montrant plus particulièrement l'opération d'imprégnation de résine autour de la préforme ;
- les figures 7a, 7b, 7c, et 7d sont des schémas illustrant les différentes étapes du processus de pose d'une conduite grâce au procédé selon l'invention ;
- la figure 8 est une section transversale de la préforme de départ ;
- les figures 9 et 10 illustrent, toujours en coupe transversale, la mise en place de la préforme préalablement imprégnée de résine, respectivement avant et après gonflage.

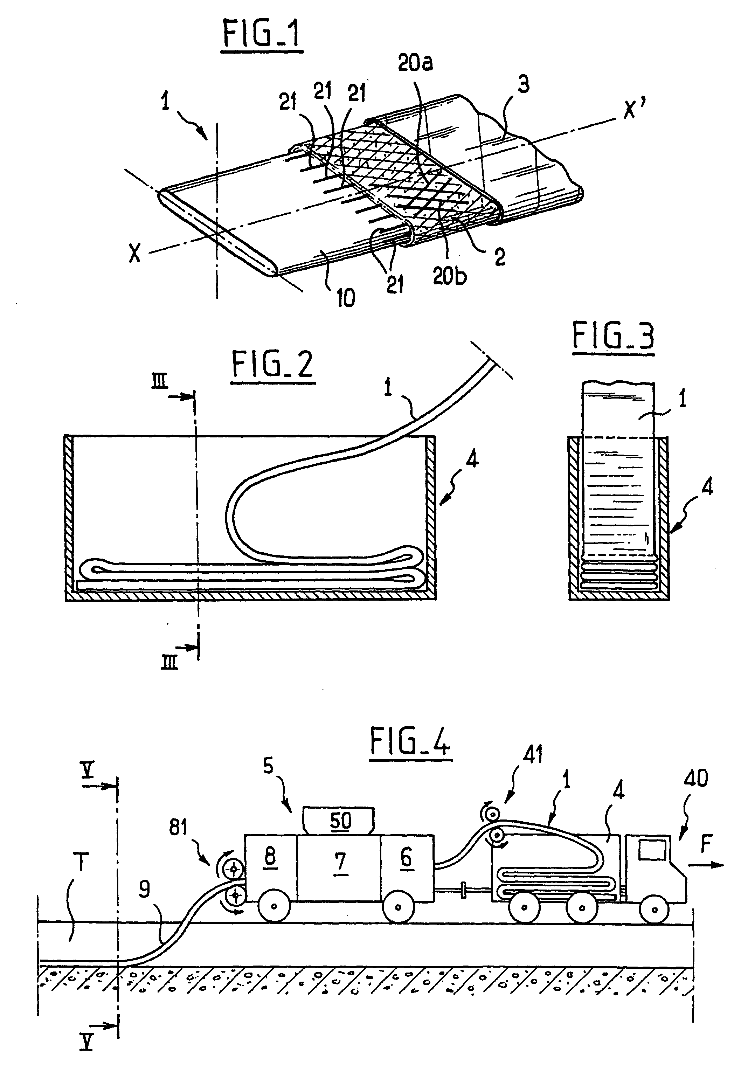

La préforme de départ 1, illustrée sur la figure 1, est pliée sur elle-même, en l'occurrence aplatie à la manière d'un tuyau d'incendie vide d'eau.

Sa paroi est souple et déformable, et comprend, de l'intérieur vers l'extérieur, une mince peau d'étanchéité tubulaire 10, une armature filamentaire 2, et un revêtement protecteur 3.

Cette préforme 1, dont l'axe longitudinal est référencé **X-X'**, peut avoir une longueur relativement importante, par exemple de l'ordre 1 000 à 2 000 m.

La peau intérieure 10 est par exemple en caoutchouc synthétique.

L'armature filamentaire 2 est constituée d'un assemblage de fibres 20, telles que des fibres de verre ou de carbone, par exemple, qui donneront à la conduite finie les qualités mécaniques et chimiques requises.

L'armature filamentaire 2 peut être avantageusement constituée d'un ensemble de structures tubulaires concentriques emmanchées les unes dans les autres, et formées chacune d'un tressage de filaments plats, ou rubans 20, répartis en deux séries 20a, 20b qui s'entrecroisent symétriquement par rapport à l'axe **X-X'**.

Chaque ruban est, par exemple, formé d'une pluralité de fibres juxtaposées.

Une structure tubulaire de ce genre est décrite dans le document WO-94 25655, auquel on pourra se reporter au besoin.

Il est important que la déformation radiale de la préforme qui, comme on le verra plus loin, se fait pneumatiquement, corresponde à un diamètre bien défini.

Pour cela, dans l'hypothèse où on utilise un tressage de fibres entrecroisées tel que mentionné ci-dessus, ce résultat peut être obtenu en utilisant une valeur d'angle de 108° entre les deux séries de rubans 20a, 20b (soit 54 ° de part et d'autre de l'axe longitudinal), angle qui rend la préforme inexpansible radialement par application d'une pression interne.

Corrélativement, du fait que la paroi de la préforme est inexpansible radialement, sa longueur est invariable sous l'effet du gonflage.

L'armature 2 est dépourvue de résine.

Le revêtement externe 3 est un revêtement provisoire, qui peut être obtenu par exemple par enroulement hélicoïdal d'une bande en matière plastique de faible épaisseur. La fonction du revêtement 3 est de maintenir l'armature filamentaire 2 à l'abri des salissures, et de faciliter la manipulation de la préforme, notamment pour la stocker et la déstocker.

On observera sur la figure 1 que l'armature 2 comprend des fils 21 longitudinaux ; il s'agit de fils électriquement conducteurs qui, dans l'exemple illustré, sont disposés suivant la direction longitudinale de la préforme. Ils sont adaptés pour permettre le chauffage de la paroi de la préforme par effet Joule, ces fils 21 étant agencés pour constituer un ou plusieurs circuits électrique susceptibles d'être branchés à un générateur de courant électrique à l'une des extrémités de la préforme.

Les figures 2 et 3 montrent un mode de stockage possible de la préforme 1.

Selon ce mode de stockage on utilise un conteneur 4, ou panier, de forme parallélipède rectangle, dont la largeur correspond à la largeur du tronçon de préforme 1.

La préforme est repliée sur elle-même en zigzag, pour former des couches empilées les unes sur les autres, remplissant l'espace intérieur du conteneur.

Comme illustré sur la figure 4, le conteneur 4 peut constituer un compartiment d'une caisse de camion 40, destiné à être déplacé le long de la tranchée **T** à garnir, par exemple en chevauchant cette tranchée.

L'installation qui est très schématiquement représentée sur les figures 4 à 6 est constituée du camion précité 40, auquel est attelée une remorque 5.

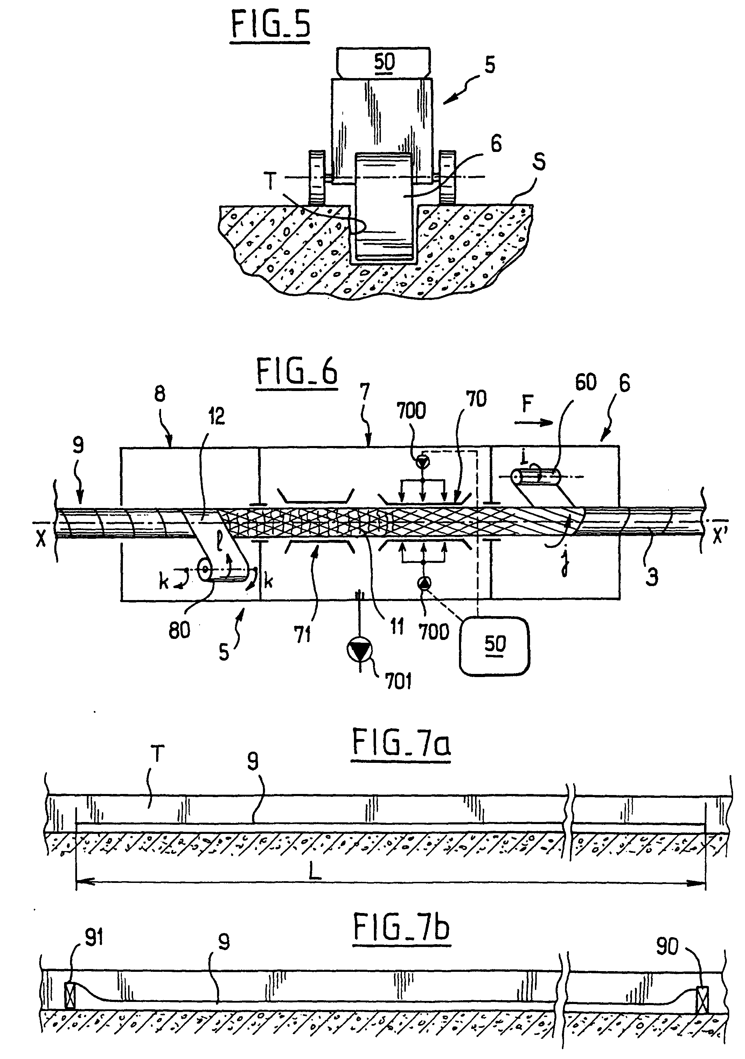

L'ensemble est monté sur roues, susceptibles de chevaucher la tranchée **T**, comme cela est visible sur la figure 5.

Le conteneur 4 est pourvu d'un dispositif 41 de déstockage et de distribution du tronçon de préforme 1 contenu dans ledit conteneur 4.

Ce dispositif peut être de tout type connu approprié ; sur la figure 4 il est schématisé par une paire de rouleaux rotatifs, qui assure linéairement l'extraction continue et régulière du tronçon 1 hors du conteneur 4.

Le tronçon de préforme traverse ensuite des dispositifs de traitement 6, 7, 8, qui équipent la remorque 5. Ils sont extraits de celle-ci en continu de manière progressive et régulière, par un dispositif 81 qui peut être un dispositif à rouleaux similaire au dispositif 41, après quoi il est déposé dans le fond de la tranchée **T**.

Il va de soi que la vitesse d'avance de l'ensemble mobile 4-5, qui est symbolisée par la flèche **F** sur les figures 4 et 6, est synchronisée avec la vitesse d'extraction de la préforme mise en oeuvre par les moyens 41, 81, de telle sorte que la préforme est déposée progressivement et de manière régulière, en continu, au fond de la tranchée **T**.

La remorque 5 est équipée d'une cuve 50 contenant la résine liquide destinée à être incorporée dans la préforme 1.

Il s'agit par exemple d'une résine polymérisable à chaud, liquide à température ambiante ; la cuve 50 est calorifugée et sa température est contrôlée pour que la résine y soit conservée dans de bonnes conditions.

Le dispositif 6 est adapté pour enlever l'enveloppe protectrice 3 mentionnée plus haut.

A cet effet ce dispositif comporte une bobine réceptrice 60, qui est montée rotative, d'une part sur son propre axe, parallèle à l'axe **X-X'** de la préforme, et d'autre part autour de la préforme.

Des moyens de commande appropriés, non représentés sont prévus pour imprimer à la bobine 60 ces deux mouvements de rotation conjugués.

Sur la figure 6 on a symbolisé par la flèche **i** la rotation de la bobine réceptrice 60 sur elle-même, et par la flèche **j** la rotation de la bobine autour de la préforme, ces mouvements assurant l'arrachement et l'enlèvement par déroulement (et réenroulement sur la bobine) de la bande protectrice 3.

L'armature filamentaire 2 se trouve ainsi mise à nu.

La préforme pénètre ensuite dans le dispositif de traitement 7.

Ce dispositif a pour fonction d'imprégner toujours en continu, l'armature filamentaire 2 de résine.

A cet effet, il comprend des moyens 70 d'enrobage de la préforme par de la résine prélevée dans la cuve 50, via un système de distribution comprenant une ou plusieurs pompes appropriées 700.

De préférence, l'espace intérieur du dispositif de traitement 7 est maintenu sous dépression (par rapport à la pression atmosphérique), au moyen d'une pompe à vide 701. Des joints d'étanchéité appropriés sont prévus à cet effet dans les passages séparant le dispositif 7 des dispositifs amont 6 et aval 8.

Différents principes peuvent être prévus qui permettent d'enduire de résine l'armature filamentaire garnissant la préforme, cette enduction pouvant se faire par passage dans un bain, ou par projection de résine notamment. La dépression autour de la préforme favorise son imprégnation par la résine, évitant la formation de bulles.

Il convient de noter que l'imprégnation sous vide d'une armature filamentaire tubulaire est une opération connue en soi (voir par exemple le document US-3 737 261).

De préférence, lorsque la préforme a été enrobée de résine, on la refroidit en la faisant transiter par un dispositif réfrigérant 71, lequel peut être également de tout type connu.

A titre d'exemple, il est possible, à ce poste, de projeter des jets d'air froid contre la surface de la préforme de manière à figer la résine au moins partiellement pour éviter qu'elle ne s'écoule inopinément, ce qui risquerait d'entraîner des irrégularités d'épaisseur de paroi.

Le dispositif 8 de traitement suivant a pour fonction de recouvrir d'une enveloppe protectrice la préforme qui vient d'être imprégnée de résine et refroidie.

Le revêtement protecteur peut également consister, comme le revêtement initial 3, en une bande de film souple 12, par exemple en matière plastique, qui enroulée en hélice autour de la préforme. Sa fonction est de confiner la résine autour de la préforme et d'empêcher qu'elle ne soit souillée par le sable ou la terre de la tranchée.

A cet effet, le film protecteur 12 est porté par une bobine 80 qui peut à la fois tourner autour de son propre axe, comme symbolisé par les flèches **k**, dans le sens du dévidage, et autour de la préforme, comme symbolisé par la flèche **l.**

Le tronçon de la préforme 9 imprégné de résine, et protégée par un film protecteur est déposée en continu sur toute sa longueur, référencée **L**, dans le fond de la tranchée **T** par suite du déplacement de l'ensemble mobile 4, 5 le long de celle-ci.

Cette situation est illustrée sur la figure 7a.

On obture ensuite les deux extrémités de la préforme 9 de manière étanche à l'air au moyen de bouchons obturateurs 90, 91, comme illustré sur la figure 7b.

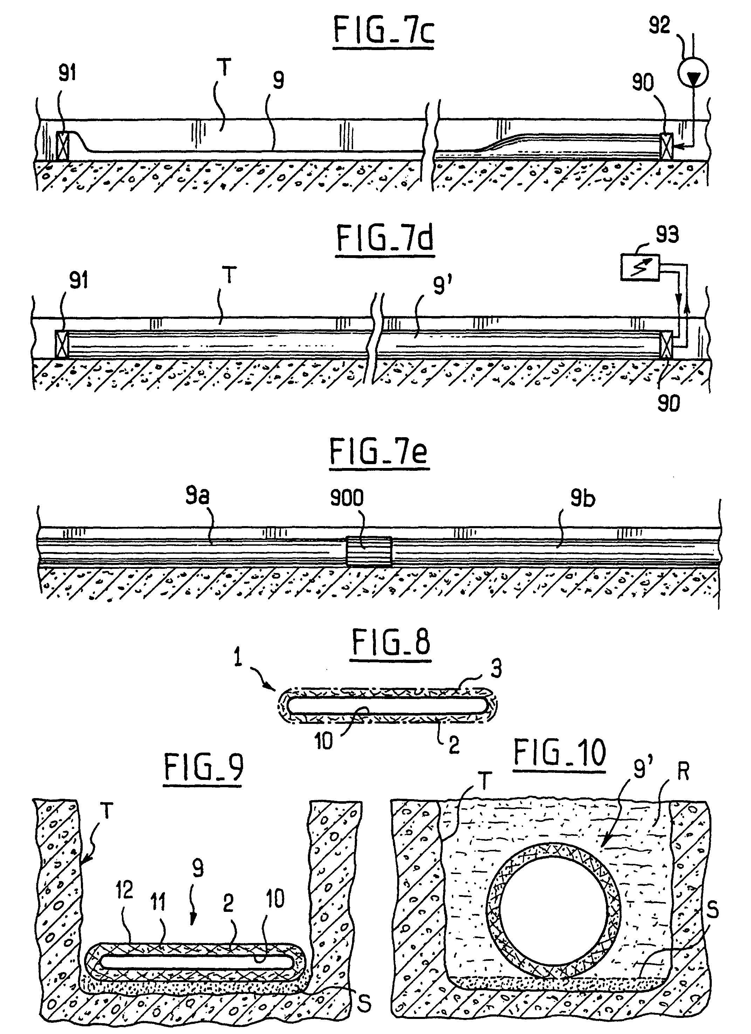

On connecte ensuite un compresseur pneumatique 92 sur l'un des bouchons obturateurs, en l'occurrence le bouchon 90, comme illustré sur la figure 7c.

Au moyen de ce compresseur 92, on gonfle la préforme 9 par de l'air comprimé ; le gonflage se propage progressivement du bouchon 90 vers le bouchon opposé 91, et la préforme est mise "au rond", prenant une forme cylindrique.

Bien entendu, le film protecteur 12 est suffisamment souple et élastique pour ne pas contrarier la dilatation radiale de la paroi de préforme au cours du gonflage.

Comme déjà dit plus haut, la section circulaire ainsi obtenue est bien déterminée, et constante d'une extrémité à l'autre, en raison du caractère inexpansible de l'armature filamentaire.

Une pression de l'ordre de 1 bar est suffisante pour assurer un gonflage correct de la préforme, sur toute sa longueur **L**.

On procède ensuite au durcissement de la résine.

Dans l'exemple illustré sur la figure 7d, ce durcissement est obtenu par voie électrique, un générateur de courant électrique 93 étant connecté au circuit de résistances électriques 21 mentionné plus haut en référence à la figure 1.

On réalise ainsi par effet Joule la polymérisation de la résine imprégnant l'armature 2.

La polymérisation est achevée au bout de quelques heures de traitement thermique.

Une fois que le tronçon de conduite, référencé 9' sur la figure 7d, est parfaitement rigide, on peut enlever les bouchons d'extrémité 90, 91.

On procède ensuite de la même manière avec le tronçon de conduite suivant.

Il est facile de connecter les différents tronçons bout à bout, par exemple en enroulant autour des zones d'extrémité adjacentes de deux tronçons voisins des couches de tissu imprégné de résine durcissable appropriée pour constituer un manchon connecteur, qui est étanche après durcissement de la résine.

La figure 7e illustre la jonction bout à bout de deux tronçons de conduite 9a, 9b au moyen d'un tel manchon 900.

Sur les figures 8, 9 et 10 on a représenté respectivement la préforme de départ 1, dépourvue de résine, et aplatie, la préforme 9 imprégnée de résine, toujours aplatie, déposée au fond de la tranchée sur un lit de sable **S**, et la conduite terminée 9', mise au rond et rigidifiée, et recouverte de remblai **R**. A titre indicatif, la conduite 9' a un diamètre compris entre 300 mm et 600 mm environ, et une épaisseur de paroi comprise entre 10 mm et 30 mm environ.

Il va de soi qu'on pourrait utiliser une résine de type catalytique qui ne nécessite pas de source de chaleur pour être polymérisée.

Dans cette hypothèse, l'installation mobile 5 peut être équipée de deux cuves, l'une recevant la résine et l'autre recevant l'agent catalyseur, ces deux produits étant mélangés au moment de l'imprégnation de la préforme.

Au lieu d'être stocké à l'état plié, le tronçon de préforme peut être enroulé sur un tambour récepteur (dévidoir). La section de préforme initiale n'est pas forcément plate. Elle peut être pliée en U ou en "escargot", par exemple.

Le volume de résine nécessaire est compris entre 5 et 20 litres environ, par mètre linéaire de conduite.

L'ensemble mobile 4-5 ne chevauche pas nécessairement la tranchée qui doit recevoir la conduite.

L'installation peut être agencée de manière à longer la tranchée sur l'un de ses côtés, un système de déport latéral de la préforme étant prévu pour la guider et la déposer dans la tranchée au fur et à mesure de l'avance de l'installation.

Au fur et à mesure de l'avancée de l'opération, on réapprovisionne l'installation en résine et en tronçons de préforme.

La résine peut être amenée sur le site dans des fûts calorifugés, à température contrôlée.

Les tronçons de préforme peuvent y être amenés dans des paniers 4 ou sur des tambours amovibles, adaptables facilement sur le camion 40.

L'invention est particulièrement adaptée pour la pose d'oléoducs, de gazoducs et de canalisations similaires destinées au transport de fluide sur de grandes distances.

Cette pose ne se fait pas nécessairement dans une tranchée, le support pouvant être simplement constitué par le sol, ou consister en un ensemble de berceaux de suspension supportant la conduite à intervalles réguliers à une certaine hauteur au dessus du sol. L'installation est naturellement conçue de telle sorte qu'elle est adaptée au support en question.

## Revendications

1. Procédé de mise en place d'une conduite cylindrique dans une tranchée (T), ouverte vers le haut, à partir d'un tronçon de préforme tubulaire souple, initialement pliée sur elle-même et aplatie à la manière d'un tuyau d'incendie vide d'eau, susceptible d'être mis au rond, mais non radialement expansible, par gonflage sous l'effet d'une pression interne, et dont la paroi comporte une armature filamentaire (2) entourant une peau d'étanchéité intérieure (10), **caractérisé par le fait que** :
- d'une part, cette mise en place se fait sans retournement sur elle-même de la paroi de la préforme ;
- d'autre part, on opère de la manière suivante :
a) on amène le tronçon de préforme (1) à proximité de la tranchée (T);
b) on imprègne, in situ, l'armature (2) d'une résine durcissable (11) ;
c) on dépose le tronçon de préforme (1) encore à l'état aplati, de haut en bas dans la tranchée (T) ;
d) on gonfle le tronçon de préforme par voie pneumatique, après en avoir obturé les extrémités, de manière à lui donner une forme cylindrique ;
e) on provoque le durcissement de la résine (11);
les opérations (b) et (c) se faisant en continu.

2. Procédé selon la revendication 1, **caractérisé par le fait qu'**on revêt le tronçon de préforme (9) d'une enveloppe tubulaire protectrice (12), après avoir imprégné son armature (2) de la résine durcissable (11), avant de la déposer dans la tranchée.

3. Procédé selon la revendication 1, **caractérisé par le fait que** l'imprégnation de la résine est réalisée sous dépression.

4. Procédé selon l'une des revendications 1 à 3, **caractérisé par le fait qu'**on utilise une résine (11) thermodurcissable.

5. Procédé selon la revendication 4, **caractérisé par le fait qu'**on durcit la résine (11) par chauffage, par effet Joule au moyen de résistances électriques (21) incorporées dans l'armature filamentaire (2).

6. Procédé selon l'une des revendications 1 à 5, **caractérisé par le fait que** l'armature filamentaire (2) comprend un tressage de fibres croisées (21a, 21b), apte à empêcher l'expansion radiale de la paroi de la préforme (9) lorsqu'elle est mise au rond.

7. Procédé selon l'une des revendications 1 à 6, **caractérisé par le fait qu'**on amène le tronçon de préforme (1) sur le site à l'état stocké, replié ou enroulé.

8. Procédé selon l'une des revendications 1 à 7, **caractérisé par le fait qu'**on utilise un tronçon de préforme (1) initialement revêtu d'une enveloppe tubulaire protectrice (3), que l'on ôte avant d'imprégner l'armature (2) de la résine durcissable (11).

9. Procédé selon l'une des revendications 1 à 8, **caractérisé par le fait qu'**on réalise la conduite par raccordement bout à bout de plusieurs tronçons de préforme (9a, 9b).

10. Installation servant à mettre en place une conduite cylindrique dans une tranchée (T), à partir d'un tronçon de préforme tubulaire souple et initialement pliée sur elle-même et aplatie à la manière d'un tuyau d'incendie vide d'eau, apte à être mis au rond mais non expansible radialement par gonflage sous l'effet d'une pression interne, et dont la paroi est pourvue d'une armature filamentaire (2), cette mise en place se faisant sans retournement sur elle-même de la paroi du tronçon de préforme,
**caractérisée par le fait qu'**elle comprend un ensemble mobile (4-5) susceptible de se déplacer le long du support, et comportant :
- une enceinte de stockage (4) du tronçon de préforme plié (1) ;
- des moyens (41) pour entraîner progressivement ledit tronçon (1) hors de l'enceinte (4) ;
- une cuve de stockage (50) contenant une résine durcissable ;
- des moyens (70) pour imprégner de résine (11) l'armature filamentaire (2), ceci en continu, au fur et à mesure qu'elle est extraite de l'enceinte (4);
- des moyens (8 ; 81) pour déposer dans la tranchée (T), toujours en continu, et de haut en bas, le tronçon de préforme (9) préalablement garni de résine et encore à l'état aplati ;
- des moyens (90-91 ; 92) pour insuffler de l'air comprimé à l'intérieur du tronçon de préforme et le gonfler, de manière à lui donner une forme cylindrique, après qu'il ait été déposé dans la tranchée ;
- des moyens (93) aptes à provoquer le durcissement de la résine.

11. Installation selon la revendication 10, destinée à être mise en oeuvre pour une préforme à résine thermodurcissable, **caractérisée par le fait que** lesdits moyens (93) pour provoquer le durcissement de la résine sont des moyens de chauffage.

12. Installation selon la revendication 11, **caractérisée par le fait que** lesdits moyens (93) sont des moyens électriques, aptes à chauffer la résine par effet Joule, via des résistances chauffantes (21) incorporées dans l'armature (2).

13. Installation selon l'une des revendications 10 à 12, **caractérisée par le fait qu'**elle comporte une pompe à vide (701) adaptée pour mettre en dépression les moyens (70) d'imprégnation de résine.

## Patentansprüche

1. Verfahren zum Verlegen einer zylindrischen Leitung in einem nach oben offenen Graben (T), ausgehend von einem Teilstück mit weicher schlauchartiger Vorformung, das anfänglich übereinander gefaltet und in der Art eines wasserleeren Feuerlöschschlauches abgeflacht ist, das durch Aufblasen unter der Einwirkung eines Innendrucks rund ausgebildet werden kann, das aber nicht radial ausdehnbar ist, und dessen Wand eine Drahtbewehrung (2) aufweist, welche eine innere Dichtungshaut (10) umgibt, **dadurch gekennzeichnet, dass**:
- einerseits diese Verlegung ohne Umschlag um sich selbst der Wand des Vorformlings stattfindet;
- andererseits auf folgende Art und Weise vorgegangen wird:
a) das Vorformlingsteilstück (1) wird in die Nähe des Grabens (T) gebracht;
b) die Bewehrung (2) wird in situ mit einem aushärtenden Harz (11) imprägniert;
c) das Vorformlingsteilstück (1) wird im noch abgeflachten Zustand von oben nach unten in dem Graben (T) angeordnet;
d) das Vorformlingsteilstück wird, nachdem die Enden verschlossen worden sind, auf pneumatischen Wege derart aufgeblasen, dass ihm eine zylindrische Form verliehen wird;
e) die Aushärtung des Harzes (11) wird bewirkt;
wobei die Schritte (b) und (c) kontinuierlich durchgeführt werden.

2. Verfahren gemäß Anspruch 1, **dadurch gekennzeichnet, dass** das Vorformlingsteilstück (9) mit einer röhrenförmigen Schutzhülle (12) bedeckt wird, nachdem seine Bewehrung mit dem aushärtenden Harz (11) imprägniert worden ist, und bevor es in dem Graben angeordnet wird.

3. Verfahren gemäß Anspruch 1, **dadurch gekennzeichnet, dass** die Imprägnierung mit dem Harz mit Unterdruck stattfindet.

4. Verfahren gemäß einem der Ansprüche 1 bis 3, **dadurch gekennzeichnet, dass** ein wärmeaushärtendes Harz (11) eingesetzt wird.

5. Verfahren gemäß Anspruch 4, **dadurch gekennzeichnet, dass** das Harz (11) durch Erwärmung durch Joulesche Wärme mittels in der Drahtbewehrung (2) eingefügter elektrischer Widerstände (21) ausgehärtet wird.

6. Verfahren gemäß einem der Ansprüche 1 bis 5, **dadurch gekennzeichnet, dass** die Drahtbewehrung (2) ein Geflecht aus gekreuzten Fasern (21a, 21b) aufweist, das dazu in der Lage ist, eine radiale Ausdehnung der Wand des Vorformlings (9) zu verhindern, wenn er in die runde Form gebracht wird.

7. Verfahren gemäß einem der Ansprüche 1 bis 6, **dadurch gekennzeichnet, dass** das Vorformlingsteilstück (1) an die Stelle im gelagerten, zusammengefalteten oder eingerollten Zustand gebracht wird.

8. Verfahren gemäß einem der Ansprüche 1 bis 7, **dadurch gekennzeichnet, dass** ein Vorformlingsteilstück (1) verwendet wird, das anfänglich mit einer röhrenförmigen Schutzhülle (3) bedeckt ist, welche vor der Imprägnierung der Bewehrung (2) mit dem aushärtenden Harz (11) entfernt wird.

9. Verfahren gemäß einem der Ansprüche 1 bis 8, **dadurch gekennzeichnet, dass** die Leitung durch Anschließen der Enden mehrerer Vorformlingsteilstücke (9a, 9b) hergestellt wird.

10. Anlage, die dazu dient, in einem Graben (T) eine zylindrische Leitung zu verlegen, ausgehend von einem Teilstück mit weicher schlauchartiger Vorformung, das anfänglich übereinander gefaltet und in der Art eines wasserleeren Feuerlöschschlauches abgeflacht ist, das durch Aufblasen unter der Einwirkung eines Innendrucks rund ausgebildet werden kann, das aber nicht radial ausdehnbar ist, und dessen Wand mit einer Drahtbewehrung (2) versehen ist, wobei diese Verlegung ohne Umschlag um sich selbst der Wand des Vorformlingsteilstücks stattfindet,
**dadurch gekennzeichnet, dass** sie eine bewegliche Anordnung (4-5) aufweist, welche sich entlang des Trägers bewegen kann, und mit:
- einem Lagerbehälter (4) für das gefaltete Vorformlingsteilstück (1);
- Vorrichtungen (41) zum fortlaufenden Austreiben des Teilstücks (1) aus dem Behälter (4);
- einem Lagerbehälter (50), der ein aushärtendes Harz enthält;
- Vorrichtungen (70) zur Imprägnierung der Drahtbewehrung (2) mit dem Harz (11), und dies kontinuierlich in dem Maße wie sie aus dem Behälter (4) herausgezogen wird;
- Vorrichtungen (8; 81) zur Anordnung des zuvor mit dem Harz versehenen und sich immer noch im abgeflachten Zustand befindenden Vorformlingsteilstücks (9) kontinuierlich und von oben nach unten in dem Graben (T);
- Vorrichtungen (90-91; 92) zum Einblasen von Druckluft in das Innere des Vorformlingsteilstücks und zum Aufblasen von diesem derart, dass ihm eine zylindrische Form verliehen wird, nachdem es in dem Graben angeordnet worden ist;
- Vorrichtungen (93), die dazu geeignet sind, die Aushärtung des Harzes zu bewirken.

11. Anlage gemäß Anspruch 10, die dafür bestimmt ist, für einen Vorformling mit wärmeaushärtendem Harz eingesetzt zu werden, **dadurch gekennzeichnet, dass** die Vorrichtungen (93) zum Bewirken der Aushärtung des Harzes Erwärmungsvorrichtungen sind.

12. Anlage gemäß Anspruch 11, **dadurch gekennzeichnet, dass** die Vorrichtungen (93) elektrische Vorrichtungen sind, die dazu in der Lage sind, das Harz durch Joulesche Wärme über in der Bewehrung (2) eingefügte Heizwiderstände (21) zu erwärmen.

13. Anlage gemäß einem der Ansprüche 10 bis 12, **dadurch gekennzeichnet, dass** sie eine Vakuumpumpe (701) umfasst, die dafür eingerichtet ist, die Vorrichtungen (70) zum Imprägnieren mit dem Harz unter Unterdruck zu setzen.

## Claims

1. A method of installing a cylindrical pipe in an upwardly-open trench (T) from a segment of flexible tubular preform that is initially folded onto itself and flattened like an empty fire hose, and that is capable of being made round but not radially expandable, by being inflated under the effect of internal pressure, and whose wall includes filamentary reinforcement (2) surrounding an inner leakproof skin (10), the method being **characterized by** the fact that:
· firstly said installation is performed without turning the wall of the preform inside out;
· and secondly the following operations are performed:
a) the segment of preform (1) is brought close to the trench (T);
b) the reinforcement (2) is impregnated in situ with a settable resin (11);
c) the segment of preform (1) while still in the flat state is moved down in the trench (T);
d) the segment of preform is inflated pneumatically after its end has been closed so as to give it a cylindrical shape;
e) the resin (11) is caused to set;
with operations (b) and (c) being performed continuously.

2. A method according to claim 1, **characterized by** the fact that the preform segment (9) is covered in a protective tubular casing (12) after its reinforcement (2) has been impregnated with the settable resin (11) and prior to being put into place in the trench.

3. A method according to claim 1, **characterized by** the fact that the resin is impregnated under reduced pressure.

4. A method according to any one of claims 1 to 3, **characterized by** the fact that a thermosetting resin (11) is used.

5. A method according to claim 4, **characterized by** the fact that the resin (11) is set by heating, using the Joule effect by means of electrical resistance elements (21) incorporated in the filamentary reinforcement (2).

6. A method according to any one of claims 1 to 5, **characterized by** the fact that the filamentary reinforcement (2) comprises a braid of crossed fibers (21a, 21b) suitable for preventing the wall of the preform (9) from expanding radially when it is given a round shape.

7. A method according to any one of claims 1 to 6, **characterized by** the fact that the preform segment (1) is brought to the site in a stored state in which it is folded or wound.

8. A method according to any one of claims 1 to 7, **characterized by** the fact that a preform segment (1) is used that is initially coated in a protective tubular casing (3), which is removed prior to impregnating the reinforcement (2) with the settable resin (11).

9. A method according to any one of claims 1 to 8, **characterized by** the fact the pipe is made by connecting together a plurality of preform segments (9a, 9b) end to end.

10. An installation for putting a cylindrical pipe into place in a trench (T) using a segment of flexible tubular preform initially folded onto itself and flattened like an empty fire hose, and suitable for being made round but not radially expandable by being inflated under the effect of internal pressure, the wall of which is provided with filamentary reinforcement (2), said putting into place being performed without turning the wall of the preform segment inside out,
the installation being **characterized by** the fact that it comprises a moving unit (4-5) capable of moving along the trench and comprising:
· a storage enclosure (4) for storing the preform segment (1) in the folded state;
means (41) for entraining said segment (1) progressively out from the enclosure (4);
· a storage vessel (50) containing a settable resin;
· means (70) for impregnating the filamentary reinforcement (2) with the resin (11) continuously as the reinforcement is extracted from the enclosure (4);
· means (8; 81) for placing the preform segment (9) previously coated in resin and still in the flat state in the trench (T) on a continuous basis and in a downward direction;
means (90-91; 92) for blowing compressed air into the inside of the preform segment and inflating it so as to give it a cylindrical shape once it has been put into place in the trench; and
· means (93) suitable for causing the resin to set.

11. An installation according to claim 10, for use with a preform having a thermosetting resin, the installation being **characterized by** the fact that said means (93) for causing the resin to set are heater means.

12. An installation according to claim 12, **characterized by** the fact that said means (93) are electrical means suitable for heating the resin by the Joule effect via heater resistor elements (21) incorporated in the reinforcement (2).

13. An installation according to any one of claims 10 to 12, **characterized by** the fact that it includes a vacuum pump (701) suitable for reducing the pressure in the resin-impregnation means (70).
